# EUROPEAN PATENT APPLICATION

(11) **EP 4 727 079 A1**
(43) Date of publication of application: **15.04.2026**
(21) Application number: 25184286.0
(22) Date of filing: 20.06.2025
(51) Int. Cl.: H04L 41/0806, H04L 41/08

(54) **SYSTEMS AND METHODS FOR PROVISIONING AUTOMATIC CONFIGURATIONS ON UNCONFIGURED COMPUTING DEVICES**

(30) Priority: 09.10.2024 US 202418911032
(71) Applicant: Juniper Networks, Inc., Sunnyvale, CA 94089-1206 (US)
(72) Inventor: JAYASHEEL, Rajendra, Sunnyvale, 94089 (US); SIVARAJ, SelvaKumar, Sunnyvale, 94089 (US); C V, Pavana, Sunnyvale, 94089 (US); KUMAR, Sushant, Sunnyvale, 94089 (US)
(74) Representative: D Young & Co LLP

(57) **Abstract**

A method for provisioning automatic configurations may involve detecting a connection between a computing device and an additional computing device that runs a first protocol and is communicatively coupled to a controller via a network fabric. In one example, the method may also involve determining, via a second protocol, that the computing device is unconfigured for operation in the network fabric. Additionally or alternatively, the method may further involve enabling the controller to configure the computing device for operation in the network fabric via a provisioning mechanism in response to determining that the computing device is unconfigured for operation in the network fabric. Various other devices, systems, and methods are also disclosed.

## Description

### BACKGROUND

Network fabrics are sometimes managed by controllers that automatically configure newly added network devices. For example, a network fabric may include and/or represent a cloud controller that facilitates and/or implements a secure zero-touch provisioning (ZTP) process on day-zero devices that are not yet configured for operation in the network fabric. In this example, the day-zero devices may lack the functionality of one or more communication protocols, such as the link aggregation control protocol (LACP). Unfortunately, if such day-zero devices are connected to an aggregate Ethernet (AE) interface and/or a link aggregation group (LAG) on a network device in the network fabric, then the AE interface and/or LAG may fail to appear to the secure ZTP process because the day-zero devices lack the functionality of a necessary communication protocol (e.g., the LACP). As a result, the day-zero devices may be effectively ineligible for automatic configurations via secure ZTP processes.

### SUMMARY

Particular aspects are set out in the appended independent claims. Various optional embodiments are set out in the dependent claims.

The presently described approaches provide, from at least some perspectives, additional and improved systems and methods for provisioning automatic configurations on unconfigured computing devices.

As will be described in greater detail below, the instant disclosure generally relates to systems and methods for provisioning automatic configurations on unconfigured computing devices. In one example, a method for accomplishing such a task may involve detecting a connection between a computing device and an additional computing device that runs a first protocol and is communicatively coupled to a controller via a network fabric. In this example, the method may also involve determining, via a second protocol, that the computing device is unconfigured for operation in the network fabric. Additionally or alternatively, the method may further involve enabling the controller to configure the computing device for operation in the network fabric via a provisioning mechanism in response to determining that the computing device is unconfigured for operation in the network fabric.

Similarly, a corresponding network device may include a communication interface and circuitry communicatively coupled to the communication interface. In one example, the circuitry may be configured to communicate with a controller in a network fabric via a first protocol and/or to detect a connection between a computing device and the network device via the communication interface. In this example, the circuitry may be further configured to determine, via a second protocol, that the computing device is unconfigured for operation in the network fabric. Additionally or alternatively, the circuitry may also be configured to enable a controller to program the computing device for operation in the network fabric via a provisioning mechanism in response to determining that the computing device is unconfigured for operation in the network fabric.

A corresponding system may include a controller and a network device communicatively coupled to the controller. In one example, the network device may be configured to communicate with the controller via a first protocol and/or to detect a connection between a computing device and the network device. In this example, the network device may be further configured to determine, via a second protocol, that the computing device is unconfigured for operation in a network fabric. Additionally or alternatively, the network device may also be configured to enable a controller to program the computing device for operation in the network fabric via a provisioning mechanism in response to determining that the computing device is unconfigured for operation in the network fabric.

Features from any of the above-mentioned embodiments may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of example embodiments and are a part of the specification. Together with the following description, these drawings demonstrate and explain various principles of the instant disclosure.
FIG. 1 is an illustration of an example system for provisioning automatic configurations on unconfigured computing devices in accordance with one or more embodiments of this disclosure.
FIG. 2 is an illustration of an example network fabric for provisioning automatic configurations on unconfigured computing devices in accordance with one or more embodiments of this disclosure.
FIG. 3 is a flow diagram of an example method for provisioning automatic configurations on unconfigured computing devices in accordance with one or more embodiments of this disclosure.
FIG. 4 is a block diagram of an example computing system capable of implementing and/or being used in connection with one or more of the embodiments described and/or illustrated herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed. Rather, the instant disclosure covers all modifications, equivalents, and alternatives falling within the scope of the appended claims.

### DETAILED DESCRIPTION

The present disclosure describes various systems and methods for provisioning automatic configurations on unconfigured computing devices. As will be explained in greater detail below, embodiments of the instant disclosure may enable controllers that manage network fabrics to configure day-zero devices for operation in the network fabrics via secure zero-touch provisioning (ZTP). For example, a campus fabric may include and/or represent a cloud controller that configures a day-zero device even though the day-zero device lacks the functionality of the link aggregation control protocol (LACP).

As a specific example, the day-zero device may get connected to a communication interface of a network device in the campus fabric. In one example, the communication interface of the network device may include and/or represent an aggregate Ethernet (AE) interface and/or a link aggregation group (LAG). In this example, the network device may run and/or implement the link layer discovery protocol (LLDP) that detects the connection of the day-zero device to the communication interface. The LLDP may notify and/or inform an instance of the LACP running and/or implemented on the network device.

Continuing this example, the LLDP may obtain physical link information about the communication interface (e.g., an address of the communication interface, etc.) to which the day-zero device has been connected. For example, the LLDP may detect and/or determine that the day-zero device is connected to the "<et-0/0/1, AEO>" interface and then notify the LACP of the same. In response, the LACP may extend and/or apply to the "<et-0/0/1, AEO>" interface. Put differently, the network device may bring up and/or activate the LACP on the "<et-0/0/1, AEO>" interface.

To do so, the LACP may program and/or configure one or more settings of the "<et-0/0/1, AEO>" interface. Such settings may include and/or represent LACP partner information of the "<et-0/0/1, AEO>" interface (e.g., the partner system priority, partner system identifier, partner administrative key, partner port priority, partner port identifier, etc.). Additionally or alternatively, the LACP may bring up and/or activate a mux state machine with LACP collection and/or distribution settings to indicate that the day-zero device is configured to process traffic received via the "<et-0/0/1, AEO>" interface and/or to transmit traffic via the "<et-0/0/1, AEO>" interface. In one example, the LACP may bring up and/or activate the "<et-0/0/1, AEO>" interface locally.

By performing the foregoing steps, the network device may enable the cloud controller to configure the day-zero device via the secure ZTP even though the day-zero device initially lacked the functionality of the LACP on its own. In one example, the LLDP may detect and/or determine that the secure ZTP process has completed the configuration of the day-zero device. Additionally or alternatively, the LLDP may update one or more settings of the network device and/or the local LACP information to reflect the completion of this configuration. Upon completion of the configuration, the day-zero device may convert, transform, and/or upgrade into a day-one device configured for standard operation in the network fabric via the LACP. Accordingly, the now day-one device may transmit and/or receive traffic via the network fabric.

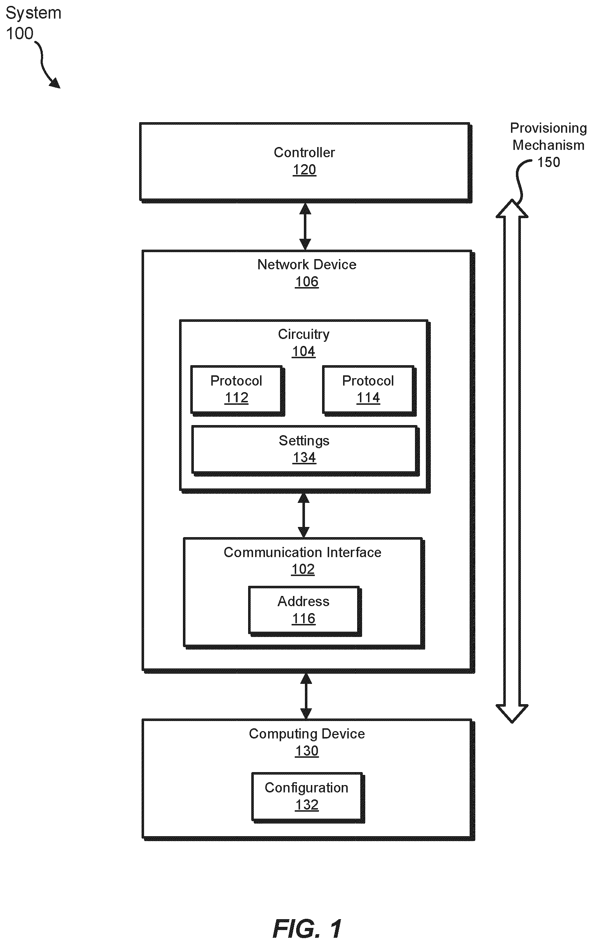

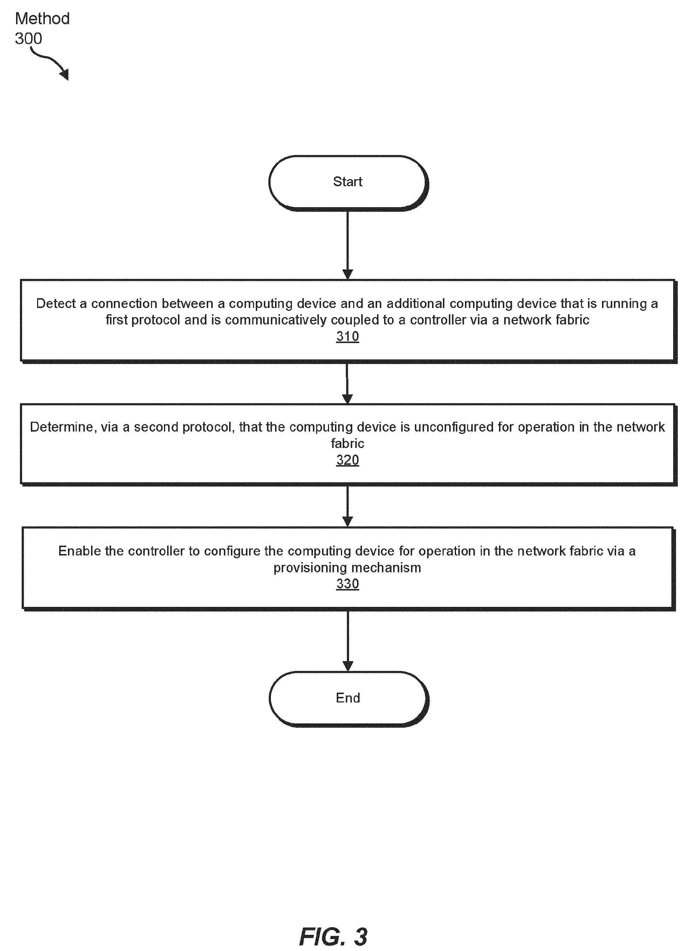

The following will provide, with reference to FIGS. 1-2 and 4, detailed descriptions of example devices, systems, and corresponding implementations for provisioning automatic configurations on unconfigured computing devices. Detailed descriptions of an example method for provisioning automatic configurations on unconfigured computing devices will be provided in connection with FIG. 3.

FIG. 1 illustrates an example system 100 capable of provisioning automatic configurations on unconfigured computing devices. As illustrated in FIG. 1, example system 100 may include and/or represent a network device 106, a controller 120, and/or a computing device 130. In some examples, a network device 106 may include and/or represent circuitry 104 and/or a communication interface 102. In one example, circuitry 104 may be communicatively coupled to communication interface 102 in network device 106. In this example, circuitry 104 and/or communication interface 102 may run, operate, and/or implement a protocol 112 and/or a protocol 114. Additionally or alternatively, circuitry 104 and/or communication interface 102 may include, use, and/or implement one or more settings 134 (e.g., LACP settings and/or information).

In some examples, network device 106 may be communicatively coupled to controller 120 in and/or via a network fabric. In one example, computing device 130 may become connected and/or communicatively coupled to network device 106 via communication interface 102. In this example, circuitry 104 may detect the connection established between computing device 130 and network device 106.

In some examples, circuitry 104 may detect, discover, and/or determine that computing device 130 is unconfigured for operation in the network fabric. In one example, circuitry 104 may perform this detection, discovery, and/or determination via protocol 114. In this example, circuitry 104 may enable controller 120 to configure, program, and/or set computing device 130 for operation in the network fabric via a provisioning mechanism 150. Circuitry 104 may do so in response to the detection, discovery, and/or determination that computing device 130 is unconfigured for operation in the network fabric.

In some examples, protocol 112 may include and/or represent an instance of the LACP. In certain examples, protocol 114 may include and/or represent an instance of the LLDP. Additionally or alternatively, provisioning mechanism 150 may a ZTP process and/or a secure ZTP process.

In some examples, computing device 130 may include and/or represent a day-zero configuration and/or state upon becoming connected to network device 106 via communication interface 102. For example, the day-zero configuration may constitute and/or represent a state and/or condition in which computing device 130 is unable to integrate into the network fabric due at least in part to lacking the proper configuration. Additionally or alternatively, the day-zero configuration may constitute and/or represent a state and/or condition in which computing device 130 has yet to be assigned one or more addresses, such as an Internet protocol (IP) address, by controller 120 to facilitate and/or support the exchange of communications and/or traffic with one or more other devices in the network fabric.

In some examples, circuitry 104 may detect, via the LLDP, computing device 130 as or upon having been communicatively coupled to network device 106. In one example, circuitry 104 may discover and/or determine physical link information about communication interface 102 via the LLDP. For example, circuitry 104 may discover and/or determine an address 116 of communication interface 102 via the LLDP. In this example, circuitry 104 may bring up, apply, and/or activate the LACP on communication interface 102 based at least in part on address 116.

In some examples, circuitry 104 may configure and/or program settings 134 of communication interface 102 with one or more default values for the LACP. In certain implementations, settings 134 may include and/or represent LACP partner information of communication interface 102 (e.g., the partner system priority, partner system identifier, partner administrative key, partner port priority, partner port identifier, etc.). In one example, circuitry 104 may bring up, apply, and/or activate an LACP collection setting to indicate that computing device 130 is configured to process traffic received via communication interface 102. Additionally or alternatively, circuitry 104 may bring up, apply, and/or activate an LACP distribution setting to indicate that computing device 130 is configured to transmit traffic via communication interface 102. Further, circuitry 104 may bring up, apply, and/or activate an AE interface that enables controller 120 to configure and/or program computing device 130 for operation in the network fabric via the ZTP process.

In some examples, during the ZTP process, circuitry 104 may receive a message from computing device 130 or controller 120 via the LACP. In one example, circuitry 104 may update settings 134 of communication interface 102 via the LACP based at least in part on the message. In this example, circuitry 104 may maintain and/or keep the LACP in operation to enable controller 120 to continue configuring computing device 130 via the ZTP process despite the message.

In some examples, circuitry 104 may detect, via the LLDP, completion of a configuration 132 of computing device 130 for operation in the network fabric. For example, controller 120 may complete the secure ZTP process to configure and/or program computing device 130 for operation in the network fabric, and circuitry 104 may detect the completion of this secure ZTP process. In this example, circuitry 104 may then update settings 134 of communication interface 102 to reflect that configuration 132 of computing device 130 has been completed. For example, circuitry 104 may update the instance of LACP on network device 106 and/or communication interface 102 to indicate that the secure ZTP process has finished and/or that computing device 130 is now configured for operation in the network fabric.

In some examples, completing configuration 132 may effectively convert, transform, and/or upgrade computing device 130 from a day-zero state to a day-one state. In one example, this day-one state may enable computing device 130 to forward traffic and/or control data to one or more additional devices via the network fabric.

In some examples, circuitry 104 may include and/or represent one or more electrical and/or electronic circuits capable of processing, applying, modifying, transforming, displaying, transmitting, receiving, and/or executing data for system 100. In one example, circuitry 104 may access and/or analyze data stored in storage device to facilitate and/or support provisioning automatic configurations on unconfigured computing devices. Additionally or alternatively, circuitry 104 may launch, perform, and/or execute certain executable files, code snippets, and/or computer-readable instructions to facilitate and/or support provisioning automatic configurations on unconfigured computing devices.

Although illustrated as a single unit in FIG. 1, circuitry 104 may include and/or represent a collection of multiple processing units and/or electrical or electronic components that work and/or operate in conjunction with one another. In one example, circuitry 104 may include and/or represent one or more application-specific integrated circuits (ASICs). Additionally or alternatively, circuitry 104 may include and/or represent one or more central processing units (CPUs) and/or graphics processing units (GPUs). Examples of circuitry 104 include, without limitation, processing devices, microprocessors, microcontrollers, field-programmable gate arrays (FPGAs), systems on chips (SoCs), parallel accelerated processors, tensor cores, integrated circuits, chiplets, optical modules, receivers, transmitters, transceivers, storage devices, memory devices, logical circuitry, portions of one or more of the same, variations or combinations of one or more of the same, and/or any other suitable circuitry.

In some examples, communication interface 102 may include and/or represent one or more ports, connections, physical interfaces, Ethernet interfaces, and/or transceivers that establish and/or support communications between computing device 130 and network device 106. Additionally or alternatively, communication interface 102 may include and/or represent one or more virtual and/or logic interfaces that establish and/or support communications between computing device 130 and network device 106. For example, communication interface 102 may include and/or represent an AE interface and/or a LAG.

In some examples, network device 106 and/or computing device 130 may each include and/or represent any type or form of physical computing device capable of reading computer-executable instructions and/or handling network traffic. Examples of network device 106 and/or computing device 130 include, without limitation, routers (such as provider edge routers, hub routers, spoke routers, autonomous system boundary routers, and/or area border routers), rackmount telecommunications devices, switches, hubs, modems, bridges, repeaters, gateways (such as broadband network gateways), multiplexers, network adapters, network interfaces, client devices, laptops, tablets, desktops, servers, variations or combinations of one or more of the same, and/or any other suitable computing devices.

In some examples, controller 120 may include and/or represent any type or form of physical and/or virtual device capable of managing a network fabric and/or performing ZTP processes to configure computing devices introduce and/or added to a network fabric. In one example, controller 120 may include and/or represent a cloud controller. Additionally or alternatively, controller 120 may include and/or represent dynamic host configuration protocol (DHCP) server.

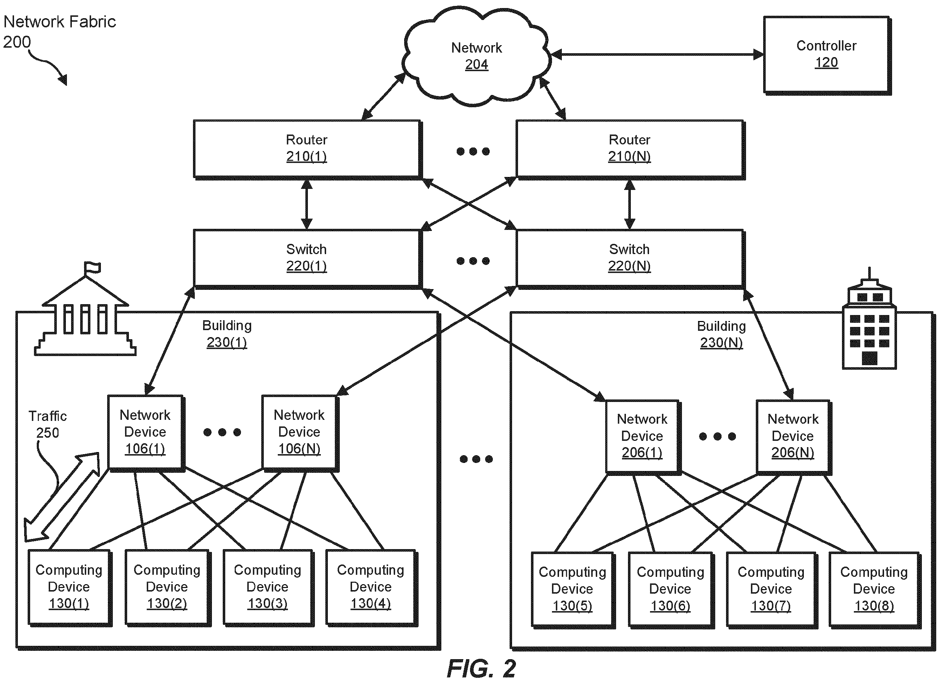

FIG. 2 illustrates an example network fabric 200 that facilitates and/or supports provisioning automatic configurations on unconfigured computing devices. In some examples, network fabric 200 in FIG. 2 may include and/or involve certain devices, components, configurations, and/or features that perform and/or provide functionalities that are similar and/or identical to those described above in connection with FIG. 1. In one example, network fabric 200 may include and/or represent a campus fabric distributed across multiple structures, such as buildings 230(1)-(N). In this example, network fabric 200 may include and/or represent network devices 106(1)-(N), network devices 206(1)-(N), computing devices 130(1), 130(2), 130(3), 130(4), 130(5), 130(6), 130(7), 130(8), switches 220(1)-(N), routers 210(1)-(N), network 204, and/or controller 120.

In some examples, building 230(1) may house, hold, and/or enclose network devices 106(1)-(N) and/or computing devices 130(1)-(4). In one example, building 230(N) may house, hold, and/or enclose network devices 206(1)-(N) and/or computing devices 130(5)-(8). In this example, network devices 106(1)-(N) may each be communicatively coupled and/or connected to each of computing devices 130(1)-(4), and/or network devices 206(1)-(N) may each be communicatively coupled and/or connected to each of computing devices 130(5)-(8).

In some examples, switches 220(1)-(N) may each be communicatively coupled and/or connected to each of network devices 106(1)-(N) and 206(1)-(N). In one example, routers 210(1)-(N) may each be communicatively coupled and/or connected to each of switches 220(1)-(N). In this example, routers 210(1)-(N) may each be communicatively coupled to and/or connected to network 204. Additionally or alternatively, controller 120 may be communicatively coupled and/or connected to network 204. Accordingly, controller 120 may be communicatively coupled to and/or able to communicate with computing devices 130(1)-(8) via one or more of routers 210(1)-(N), switches 220(1)-(N), network devices 106(1)-(N), and/or network devices 206(1)-(N).

As a specific example, network fabric 200 may enable controller 120 to configure computing device 130(1) for operation from a day-zero state via secure ZTP. In this example, computing device 130(1) may lack the functionality of the LACP in the day-zero state. In one example, computing device 130(1) may get connected to an AE interface and/or LAG via one or more of network devices 106(1)-(N). In one example, network devices 106(1)-(N) may run and/or implement an instance of the LLDP that detects the connection of computing device 130(1) to the AE interface and/or LAG. In this example, the LLDP may notify and/or inform an instance of the LACP running and/or implemented on one or more of network devices 106(1)-(N).

Continuing this example, the LLDP may obtain physical link information about the AE interface and/or LAG to which computing device 130(1) has been connected. For example, the LLDP may detect and/or determine that computing device 130(1) is connected to the AE interface and/or LAG and then notify the LACP of the same. In response, the LACP may then be extended and/or applied to the AE interface and/or LAG. Put differently, one or more of network devices 106(1)-(N) may bring up and/or activate the LACP on the AE interface and/or LAG.

To do so, the LACP may program and/or configure one or more settings of the AE interface and/or LAG. Such settings may include and/or represent LACP partner information of the AE interface and/or LAG (e.g., the partner system priority, partner system identifier, partner administrative key, partner port priority, partner port identifier, etc.). Additionally or alternatively, the LACP may bring up and/or activate a mux state machine with LACP collection and/or distribution settings to indicate that computing device 130(1) is configured to process traffic received via the AE interface and/or LAG and/or to transmit traffic via the AE interface and/or LAG. In one example, the LACP may bring up and/or activate the AE interface and/or LAG locally.

By performing the foregoing steps, one or more of network devices 106(1)-(N) may enable controller 120 to configure computing device 130(1) via the secure ZTP even though computing device 130(1) initially lacked the functionality of the LACP on its own due to its day-zero status. In one example, the LLDP may detect and/or determine that controller 120 has completed the secure ZTP process for configuring computing device 130(1). Additionally or alternatively, the LLDP may update one or more settings of network devices 106(1)-(N) and/or the local LACP information to reflect the configuration's completion. Upon completion of the configuration, computing device 130(1) may convert, transform, and/or upgrade into a day-one device capable of standard operation in the network fabric via the LACP. Accordingly, upon achieving day-one status, computing device 130(1) may transmit and/or receive traffic 250 via network fabric 200.

Network 204 generally represents any medium or architecture capable of facilitating communication or data transfer. In one example, network 204 may facilitate communication between controller 120 and routers 210(1)-(N). In particular, network 204 may facilitate and/or support this communication via one or more intermediate nodes (e.g., hops) between controller 120 and routers 210(1)-(N). These intermediate nodes may represent and/or include any type or form of suitable network device.

Network 204 may facilitate and/or support communication or data transfer using wireless and/or wired connections. In one example, network 204 may include and/or represent all or a portion of the Internet. Additional examples of network 204 include, without limitation, an intranet, a Wide Area Network (WAN), a Local Area Network (LAN), a Personal Area Network (PAN), Power Line Communications (PLC), a cellular network (e.g., a Global System for Mobile Communications (GSM) network), an multiprotocol label switching (MPLS) network, portions of one or more of the same, variations or combinations of one or more of the same, and/or any other suitable network. Although illustrated as being a component of network fabric 200, network 204 may alternatively constitute and/or represent a conglomerate of network device outside of and/or separate from network fabric 200.

In some examples, the systems described in connection with FIGS. 1 and 2 may include and/or represent one or more additional devices, circuits, components, and/or features that are not necessarily illustrated and/or labeled in FIGS. 1 and 2. For example, the systems illustrated in FIGS. 1 and 2 may also include and/or represent additional network devices, computing devices, controllers, routers, switches, analog and/or digital circuitry, onboard logic, transistors, transmitters, receivers, transceivers, antennas, resistors, capacitors, diodes, inductors, switches, registers, flipflops, connections, traces, buses, semiconductor (e.g., silicon) devices and/or structures, processing devices, storage devices, circuit boards, sensors, packages, substrates, housings, combinations or variations of one or more of the same, and/or any other suitable components that facilitate and/or support self-contained reliability testing. In certain implementations, one or more of these additional devices, circuits, components, and/or features may be inserted and/or applied between any of the existing devices, circuits, components, and/or features illustrated in FIGS. 1 and 2 consistent with the aims and/or objectives described herein. Accordingly, the couplings and/or connections described with reference to FIGS. 1 and 2 may be direct connections with no intermediate components, devices, and/or nodes or indirect connections with one or more intermediate components, devices, and/or nodes.

In some examples, the phrase "to couple" and/or the term "coupling," as used herein, may refer to a direct connection and/or an indirect connection. For example, a direct coupling between two components may constitute and/or represent a coupling in which those two devices or components are directly connected to each other by a single node that provides continuity from one of those two devices or components to the other. In other words, the direct coupling may exclude and/or omit any additional devices or components between those two devices or components.

Additionally or alternatively, an indirect coupling between two devices and/or components may constitute and/or represent a coupling in which those two devices or components are indirectly connected to each other by multiple nodes that fail to provide direct electrical and/or communicative continuity from one of those two devices or components to the other. In other words, the indirect coupling may include and/or incorporate at least one additional device or component between those two devices or components.

FIG. 3 is a flow diagram of an example method 300 for provisioning automatic configurations on unconfigured computing devices. In one example, the steps shown in FIG. 3 may be achieved and/or accomplished by a network device included in a network fabric. Additionally or alternatively, the steps shown in FIG. 3 may incorporate and/or involve certain sub-steps and/or variations consistent with the descriptions provided above in connection with FIGS. 1 and 2.

As illustrated in FIG. 3, method 300 may include the step of detecting a connection between a computing device and an additional computing device that runs a first protocol and is communicatively coupled to a controller via a network fabric (310). Step 310 may be performed in a variety of ways, including any of those described above in connection with FIGS. 1 and 2. For example, an instance of the LLDP running on a network device may detect a newly established connection between the network device and a computing device that lacks the functionality of the LACP. In this example, the network device may be communicatively coupled to a cloud controller via a network fabric and/or the Internet. Additionally or alternatively, the connection may be established via a communication interface of the network device.

Method 300 may also include the step of determining, via a second protocol, that the computing device is unconfigured for operation in the network fabric (320). Step 320 may be performed in a variety of ways, including any of those described above in connection with FIGS. 1 and 2. For example, an instance of the LACP running on the network device may determine that the computing device is not yet configured for operation in the network fabric and/or is currently in a day-zero state.

Method 300 may further include the step of enabling the controller to configure the computing device for operation in the network fabric via a provisioning mechanism in response to determining that the computing device is unconfigured for operation in the fabric network (330). Step 330 may be performed in a variety of ways, including any of those described above in connection with FIGS. 1 and 2. For example, in response to determining that the computing device is currently in a day-zero state, the network device may bring up and/or activate the LACP on the communication interface that facilitates and/or supports the connection between the network device and the computing device. As a result, the cloud controller may then perform and/or complete a secure ZTP process on the computing device to configure the same for operation in the network fabric.

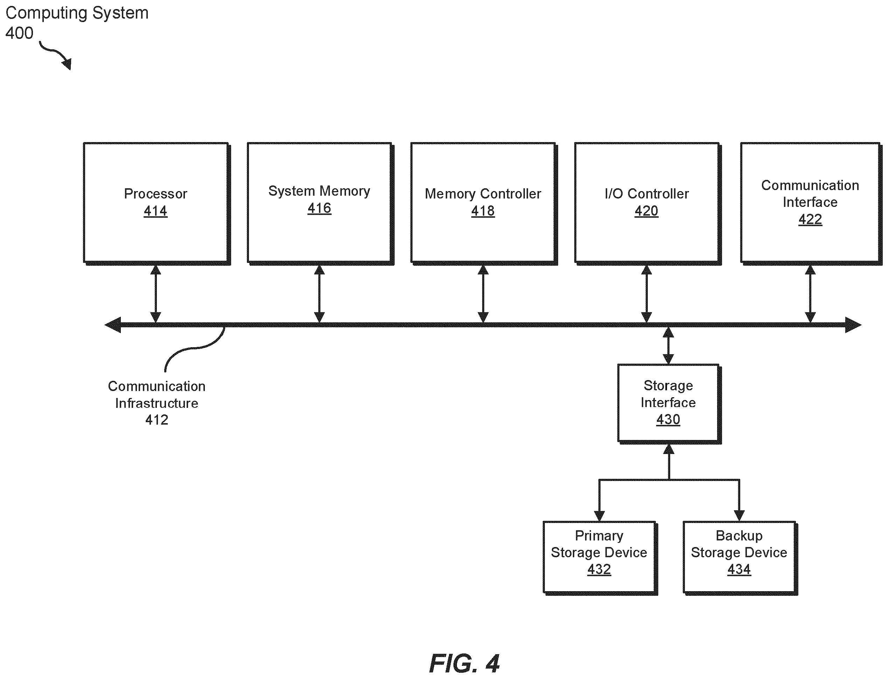

FIG. 4 is a block diagram of an example computing system 400 capable of implementing and/or being used in connection with one or more of the embodiments described and/or illustrated herein. In some embodiments, all or a portion of computing system 400 may perform and/or be a means for performing, either alone or in combination with other elements, one or more of the steps described in connection with FIG. 3. All or a portion of computing system 400 may also perform and/or be a means for performing and/or implementing any other steps, methods, or processes described and/or illustrated herein. In one example, computing system 400 may include and/or store all or a portion of certain software modules.

Computing system 400 broadly represents any type or form of electrical load, including a single or multi-processor computing device or system capable of executing computer-readable instructions. Examples of computing system 400 include, without limitation, workstations, laptops, client-side terminals, servers, distributed computing systems, mobile devices, network switches, network routers (e.g., backbone routers, edge routers, core routers, mobile service routers, broadband routers, etc.), network appliances (e.g., network security appliances, network control appliances, network timing appliances, SSL VPN (Secure Sockets Layer Virtual Private Network) appliances, etc.), network controllers, gateways (e.g., service gateways, mobile packet gateways, multi-access gateways, security gateways, etc.), and/or any other type or form of computing system or device.

Computing system 400 may be programmed, configured, and/or otherwise designed to comply with one or more networking protocols. According to certain embodiments, computing system 400 may be designed to work with protocols of one or more layers of the Open Systems Interconnection (OSI) reference model, such as a physical layer protocol, a link layer protocol, a network layer protocol, a transport layer protocol, a session layer protocol, a presentation layer protocol, and/or an application layer protocol. For example, computing system 400 may include a network device configured according to a Universal Serial Bus (USB) protocol, an Institute of Electrical and Electronics Engineers (IEEE) 1394 protocol, an Ethernet protocol, a T1 protocol, a Synchronous Optical Networking (SONET) protocol, a Synchronous Digital Hierarchy (SDH) protocol, an Integrated Services Digital Network (ISDN) protocol, an Asynchronous Transfer Mode (ATM) protocol, a Point-to-Point Protocol (PPP), a Point-to-Point Protocol over Ethernet (PPPoE), a Point-to-Point Protocol over ATM (PPPoA), a Bluetooth protocol, an IEEE 802.XX protocol, a frame relay protocol, a token ring protocol, a spanning tree protocol, and/or any other suitable protocol.

Computing system 400 may include various network and/or computing components. For example, computing system 400 may include at least one processor 414 and a system memory 416. Processor 414 generally represents any type or form of processing unit capable of processing data or interpreting and executing instructions. For example, processor 414 may represent an application-specific integrated circuit (ASIC), a system on a chip (e.g., a network processor), a hardware accelerator, a general purpose processor, and/or any other suitable processing element.

Processor 414 may process data according to one or more of the networking protocols discussed above. For example, processor 414 may execute or implement a portion of a protocol stack, may process packets, may perform memory operations (e.g., queuing packets for later processing), may execute end-user applications, and/or may perform any other processing tasks.

System memory 416 generally represents any type or form of volatile or non-volatile storage device or medium capable of storing data and/or other computer-readable instructions. Examples of system memory 416 include, without limitation, Random Access Memory (RAM), Read Only Memory (ROM), flash memory, or any other suitable memory device. Although not required, in certain embodiments computing system 400 may include both a volatile memory unit (such as, for example, system memory 416) and a non-volatile storage device (such as, for example, primary storage device 432, as described in detail below). System memory 416 may be implemented as shared memory and/or distributed memory in a network device. Furthermore, system memory 416 may store packets and/or other information used in networking operations.

In certain embodiments, example computing system 400 may also include one or more components or elements in addition to processor 414 and system memory 416. For example, as illustrated in FIG. 4, computing system 400 may include a memory controller 418, an Input/Output (I/O) controller 420, and a communication interface 422, each of which may be interconnected via communication infrastructure 412. Communication infrastructure 412 generally represents any type or form of infrastructure capable of facilitating communication between one or more components of a computing device. Examples of communication infrastructure 412 include, without limitation, a communication bus (such as a Serial ATA (SATA), an Industry Standard Architecture (ISA), a Peripheral Component Interconnect (PCI), a PCI Express (PCIe), and/or any other suitable bus), and a network.

Memory controller 418 generally represents any type or form of device capable of handling memory or data or controlling communication between one or more components of computing system 400. For example, in certain embodiments memory controller 418 may control communication between processor 414, system memory 416, and I/O controller 420 via communication infrastructure 412. In some embodiments, memory controller 418 may include a Direct Memory Access (DMA) unit that may transfer data (e.g., packets) to or from a link adapter.

I/O controller 420 generally represents any type or form of device or module capable of coordinating and/or controlling the input and output functions of a computing device. For example, in certain embodiments I/O controller 420 may control or facilitate transfer of data between one or more elements of computing system 400, such as processor 414, system memory 416, communication interface 422, and storage interface 430.

Communication interface 422 broadly represents any type or form of communication device or adapter capable of facilitating communication between example computing system 400 and one or more additional devices. For example, in certain embodiments communication interface 422 may facilitate communication between computing system 400 and a private or public network including additional computing systems. Examples of communication interface 422 include, without limitation, a link adapter, a wired network interface (such as a network interface card), a wireless network interface (such as a wireless network interface card), and any other suitable interface. In at least one embodiment, communication interface 422 may provide a direct connection to a remote server via a direct link to a network, such as the Internet. Communication interface 422 may also indirectly provide such a connection through, for example, a local area network (such as an Ethernet network), a personal area network, a wide area network, a private network (e.g., a virtual private network), a telephone or cable network, a cellular telephone connection, a satellite data connection, or any other suitable connection.

In certain embodiments, communication interface 422 may also represent a host adapter configured to facilitate communication between computing system 400 and one or more additional network or storage devices via an external bus or communications channel. Examples of host adapters include, without limitation, Small Computer System Interface (SCSI) host adapters, Universal Serial Bus (USB) host adapters, IEEE 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 422 may also enable computing system 400 to engage in distributed or remote computing. For example, communication interface 422 may receive instructions from a remote device or send instructions to a remote device for execution.

As illustrated in FIG. 4, example computing system 400 may also include a primary storage device 432 and/or a backup storage device 434 coupled to communication infrastructure 412 via a storage interface 430. Storage devices 432 and 434 generally represent any type or form of storage device or medium capable of storing data and/or other computer-readable instructions. For example, storage devices 432 and 434 may represent a magnetic disk drive (e.g., a so-called hard drive), a solid state drive, a floppy disk drive, a magnetic tape drive, an optical disk drive, a flash drive, or the like. Storage interface 430 generally represents any type or form of interface or device for transferring data between storage devices 432 and 434 and other components of computing system 400.

In certain embodiments, storage devices 432 and 434 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 432 and 434 may also include other similar structures or devices for allowing computer software, data, or other computer-readable instructions to be loaded into computing system 400. For example, storage devices 432 and 434 may be configured to read and write software, data, or other computer-readable information. Storage devices 432 and 434 may be a part of computing system 400 or may be separate devices accessed through other interface systems.

Many other devices or subsystems may be connected to computing system 400. Conversely, all of the components and devices illustrated in FIG. 4 need not be present to practice the embodiments described and/or illustrated herein. The devices and subsystems referenced above may also be interconnected in different ways from those shown in FIG. 4. Computing system 400 may also employ any number of software, firmware, and/or hardware configurations. For example, one or more of the example embodiments disclosed herein may be encoded as a computer program (also referred to as computer software, software applications, computer-readable instructions, or computer control logic) on a computer-readable medium. The term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives and floppy disks), optical-storage media (e.g., Compact Disks (CDs) and Digital Video Disks (DVDs)), electronic-storage media (e.g., solid-state drives and flash media), and other distribution systems.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as being by way of example in nature since many other architectures can be implemented to achieve the same functionality.

In some examples, all or a portion of system 100 in FIG. 1 may represent portions of a cloud-computing or network-based environment. Cloud-computing and network-based environments may provide various services and applications via the Internet. These cloud-computing and network-based services (e.g., software as a service, platform as a service, infrastructure as a service, etc.) may be accessible through a web browser or other remote interface. Various functions described herein may also provide network switching capabilities, gateway access capabilities, network security functions, content caching and delivery services for a network, network control services, and/or and other networking functionality.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

Therefore, from one perspective, there has been described a method for provisioning automatic configurations may involve detecting a connection between a computing device and an additional computing device that runs a first protocol and is communicatively coupled to a controller via a network fabric. In one example, the method may also involve determining, via a second protocol, that the computing device is unconfigured for operation in the network fabric. Additionally or alternatively, the method may further involve enabling the controller to configure the computing device for operation in the network fabric via a provisioning mechanism in response to determining that the computing device is unconfigured for operation in the network fabric. Various other devices, systems, and methods are also disclosed.

Further examples of feature combinations taught by the present disclosure are set out in the following numbered clauses.

Clause 1. A method comprising: detecting a connection between a computing device and an additional computing device that: runs a first protocol; and is communicatively coupled to a controller via a network fabric; determining, via a second protocol, that the computing device is unconfigured for operation in the network fabric; and in response to determining that the computing device is unconfigured for operation in the network fabric, enabling the controller to configure the computing device for operation in the network fabric via a provisioning mechanism.

Clause 2. The method of clause 1, wherein: the first protocol comprises a link aggregation control protocol (LACP); the second protocol comprises a link layer discovery protocol (LLDP); and the provisioning mechanism comprises a zero-touch provisioning (ZTP) process.

Clause 3. The method of clause 2, wherein detecting the connection between the computing device and the additional computing device comprises detecting, via the LLDP, the computing device upon having been communicatively coupled to the additional computing device.

Clause 4. The method of clause 2 or 3, further comprising: discovering, via the LLDP, an address of a communication interface of the additional computing device to which the computing device is communicatively coupled; and activating the LACP on the communication interface based at least in part on the address.

Clause 5. The method of clause 4, wherein activating the LACP on the communication interface comprises configuring, via the LACP, one or more settings of the communication interface with one or more default values.

Clause 6. The method of clause 5, wherein configuring the settings of the communication interface comprises at least one: activating an LACP collection setting to indicate that the computing device is configured to process traffic received via the communication interface; or activating an LACP distribution setting to indicate that the computing device is configured to transmit traffic via the communication interface.

Clause 7. The method of clause 5 or 6, wherein configuring the settings of the communication interface comprises activating an aggregate Ethernet interface that enables the controller to configure the computing device for operation in the network fabric via the ZTP process.

Clause 8. The method of clause 5, 6 or 7, further comprising: receiving, via the LACP, a message from the computing device or the controller; updating, via the LACP, the setting of the communication interface based at least in part on the message; and maintaining the LACP in operation to enable the controller to continue configuring the computing device via the ZTP process despite the message.

Clause 9. The method of any of clauses 4 to 8, wherein the communication interface comprises at least one of: an aggregate Ethernet interface; or a link aggregation group (LAG).

Clause 10. The method of any preceding clause, further comprising: detecting, via the second protocol, completion of the configuration of the computing device for operation in the network fabric; and updating, via the first protocol, one or more settings of the additional computing device to reflect the completion of the configuration.

Clause 11. The method of any preceding clause, further comprising, upon completion of the configuration of the computing device, enabling the computing device to forward traffic via the connection.

Clause 12. A network device comprising: a communication interface; and circuitry communicatively coupled to the communication interface, wherein the circuitry is configured to: communicate with a controller in a network fabric via a first protocol; detect a connection between a computing device and the network device via the communication interface; determine, via a second protocol, that the computing device is unconfigured for operation in the network fabric; and enable the controller to configure the computing device for operation in the network fabric via a provisioning mechanism in response to determining that the computing device is unconfigured for operation in the network fabric.

Clause 13. The network device of clause 12, wherein: the first protocol comprises a link aggregation control protocol (LACP); the second protocol comprises a link layer discovery protocol (LLDP); and the provisioning mechanism comprises a zero-touch provisioning (ZTP) process.

Clause 14. The network device of clause 13, wherein the circuitry is further configured to detect, via the LLDP, the computing device upon having been communicatively coupled to the network device.

Clause 15. The network device of clause 13 or 14, wherein the circuitry is further configured to: discover, via the LLDP, an address of a communication interface of the network device to which the computing device is communicatively coupled; and activate the LACP on the communication interface based at least in part on the address.

Clause 16. The network device of clause 15, wherein the circuitry is further configured to program, via the LACP, one or more settings of the communication interface with one or more default values.

Clause 17. The network device of clause 16, wherein the circuitry is further configured to: activate an LACP collection setting to indicate that the computing device is configured to process traffic received via the communication interface; or activate an LACP distribution setting to indicate that the computing device is configured to transmit traffic via the communication interface.

Clause 18. The network device of clause 16 or 17, wherein the circuitry is further configured to activate an aggregate Ethernet interface that enables the controller to configure the computing device for operation in the network fabric via the ZTP process.

Clause 19. The network device of any of clauses 16 to 18, wherein the circuitry is further configured to: receive, via the LACP, a message from the computing device or the controller; update, via the LACP, the setting of the communication interface based at least in part on the message; and maintain the LACP in operation to enable the controller to continue configuring the computing device via the ZTP process despite the message.

Clause 20. A system comprising: a controller; and a network device communicatively coupled to the controller, wherein the network device is configured to: communicate with the controller via a first protocol; detect a connection between a computing device and the network device; determine, via a second protocol, that the computing device is unconfigured for operation in a network fabric; and enable the controller to configure the computing device for operation in the network fabric via a provisioning mechanism in response to determining that the computing device is unconfigured for operation in the network fabric.

## Claims

1. A method comprising:
detecting a connection between a computing device and an additional computing device that:
runs a first protocol; and
is communicatively coupled to a controller via a network fabric;
determining, via a second protocol, that the computing device is unconfigured for operation in the network fabric; and
in response to determining that the computing device is unconfigured for operation in the network fabric, enabling the controller to configure the computing device for operation in the network fabric via a provisioning mechanism.

2. The method of claim 1, wherein:
the first protocol comprises a link aggregation control protocol (LACP);
the second protocol comprises a link layer discovery protocol (LLDP); and
the provisioning mechanism comprises a zero-touch provisioning (ZTP) process.

3. The method of claim 2, wherein detecting the connection between the computing device and the additional computing device comprises detecting, via the LLDP, the computing device upon having been communicatively coupled to the additional computing device.

4. The method of claim 2, further comprising:
discovering, via the LLDP, an address of a communication interface of the additional computing device to which the computing device is communicatively coupled; and
activating the LACP on the communication interface based at least in part on the address.

5. The method of claim 4, wherein activating the LACP on the communication interface comprises configuring, via the LACP, one or more settings of the communication interface with one or more default values.

6. The method of claim 5, wherein configuring the settings of the communication interface comprises at least one:
activating an LACP collection setting to indicate that the computing device is configured to process traffic received via the communication interface; or
activating an LACP distribution setting to indicate that the computing device is configured to transmit traffic via the communication interface.

7. The method of claim 5, wherein configuring the settings of the communication interface comprises activating an aggregate Ethernet interface that enables the controller to configure the computing device for operation in the network fabric via the ZTP process.

8. The method of claim 5, further comprising:
receiving, via the LACP, a message from the computing device or the controller;
updating, via the LACP, the setting of the communication interface based at least in part on the message; and
maintaining the LACP in operation to enable the controller to continue configuring the computing device via the ZTP process despite the message.

9. The method of claim 4, wherein the communication interface comprises at least one of:
an aggregate Ethernet interface; or
a link aggregation group (LAG).

10. The method of claim 1, further comprising:
detecting, via the second protocol, completion of the configuration of the computing device for operation in the network fabric; and
updating, via the first protocol, one or more settings of the additional computing device to reflect the completion of the configuration.

11. The method of claim 1, further comprising, upon completion of the configuration of the computing device, enabling the computing device to forward traffic via the connection.

12. A network device comprising:
a communication interface; and
circuitry communicatively coupled to the communication interface, wherein the circuitry is configured to:
communicate with a controller in a network fabric via a first protocol;
detect a connection between a computing device and the network device via the communication interface;
determine, via a second protocol, that the computing device is unconfigured for operation in the network fabric; and
enable the controller to configure the computing device for operation in the network fabric via a provisioning mechanism in response to determining that the computing device is unconfigured for operation in the network fabric.

13. The network device of claim 12, wherein:
the first protocol comprises a link aggregation control protocol (LACP);
the second protocol comprises a link layer discovery protocol (LLDP); and
the provisioning mechanism comprises a zero-touch provisioning (ZTP) process.

14. The network device of claim 13, wherein the circuitry is further configured to detect, via the LLDP, the computing device upon having been communicatively coupled to the network device.

15. A system comprising:
a controller; and
a network device communicatively coupled to the controller, wherein the network device is configured to:
communicate with the controller via a first protocol;
detect a connection between a computing device and the network device;
determine, via a second protocol, that the computing device is unconfigured for operation in a network fabric; and
enable the controller to configure the computing device for operation in the network fabric via a provisioning mechanism in response to determining that the computing device is unconfigured for operation in the network fabric.
